# EUROPÄISCHE PATENTSCHRIFT

(11) **EP 1 122 273 B1**
(45) Veröffentlichungstag und Bekanntmachung des Hinweises auf die Patenterteilung: **11.07.2007**
(21) Anmeldenummer: 01101920.5
(22) Anmeldetag: 27.01.2001
(51) Int. Cl.: C08G 18/78, C08G 18/32

(54) **Lagerstabile Polyisocyanate**
Storage stable polyisocyanates
Polyisocyanates stables au stockage

(30) Priorität: 05.02.2000 DE 10005228
(43) Veröffentlichungstag der Anmeldung: 08.08.2001
(73) Patentinhaber: BASF Aktiengesellschaft, 67056 Ludwigshafen (DE)
(72) Erfinder: Bruchmann, Bernd, Dr., 67251 Freinsheim (DE); Renz, Hans, Dr., 67149 Meckenheim (DE); Mohrhardt, Günter, 67346 Speyer (DE); Baumgart, Hubert, Dr., 48163 Münster (DE); Bitter, Simone, 48308 Senden (DE)
(74) Vertreter: Meyer, Udo

(56) Entgegenhaltungen:
- EP-A- 0 000 194
- EP-A- 0 303 150
- DE-A- 19 652 221
- DE-A- 19 801 322
- FR-A- 2 767 328

## Beschreibung

Die vorliegende Erfindung betrifft Polyisocyanate der allgemeinen Formel (I)

OCN-R¹-[-NX-CO-O-R²-O-CO-NX-R¹-]ₙ-NCO (I)

in der die Einheiten R¹, X und R² die folgende Bedeutung haben:
- R¹: eine Einheit der Formel (II)

-CH₂-CH₂-CH₂-CH₂-CH₂-CH₂- (II)
- X: Wasserstoff oder eine Einheit der Formel III

-CO-NH-R¹-NCO III
mit der Maßgabe, daß zumindest eine der Einheiten X in den Polyisocyanaten der Formel I eine Einheit der Formel III ist; und
R²:
- ein 4, 5 oder 6 gliedriger Cycloalkylenrest, bei dem bis zu 4 Wasserstoffatome durch C₁- bis C₄-Alkylreste und ein oder zwei Methyleneinheiten durch ein Sauerstoffatom, Schwefelatom und/oder eine tertiäres Stickstoffatom, das zusätzlich einen C₁- bis C₄-Alkylrest trägt, substituiert sein können oder,
- ein C₂- bis C₄-Alkylenrest, bei dem zwischen 2 C-Atomen oder zwischen einem C-Atom und einem H-Atom ein 4, 5 oder 6 gliedriger Cycloalkylenrest, bei dem bis zu 4 Wasserstoffatome durch C₁- bis C₄-Alkylreste und ein oder zwei Methyleneinheiten durch ein Sauerstoffatom, Schwefelatom und/oder ein tertiäres Stickstoffatom, das zusätzlich einen C₁- bis C₄-Alkylrest trägt, substituiert sein können, insertiert ist
und der Index n 1, 2, oder 3 bedeutet.

Weiterhin betrifft die Erfindung Isocyanat-Mischungen und 2-Komponenten-Beschichtungsmittel, die diese Isocyanate enthalten, Beschichtungsverfahren, bei denen diese 2-Komponenten-Beschichtungsmittel eingesetzt werden, sowie die nach diesen Verfahren hergestellten beschichteten Gegenstände.

Vernetzende Polyisocyanate und Bindemittelkomponenten mit gegenüber Isocyanaten reaktiven Gruppen sind z.B. in Form von 2-K-Lakken allgemein bekannt (vgl. Kunststoff Handbuch, Band 7, Polyurethane, 2. Auflage, 1993, Carl Hanser Verlag München Wien, S. 599 bis 642, und M. Bock, Polyurethane für Lacke und Beschichtungen, Vincentz-Verlag, Hannover, 1999). Diese 2-Komponenten-Beschichtungsmittel enthalten als Bindemittel beispielsweise ein polymeres Polyol und als Vernetzerkomponente (Härter) eine Verbindung mit mehreren freien Isocyanatgruppen.

Die Gebrauchseigenschaften von Lacken, deren polymere Bindemittel mit den Isocyanaten vernetzt wurden, sind gegenüber Systemen mit niedermolekularen Bindemitteln deutlich verbessert. Dies betrifft insbesondere Gebrauchseigenschaften wie
- Unempfindlichkeit gegenüber mechanischer Beanspruchung wie Zug, Dehnung, Schlägen oder Abrieb,
- Resistenz gegenüber Feuchtigkeit (z.B. in Form von Wasserdampf) und verdünnten Chemikalien,
- Beständigkeit gegenüber Umwelteinflüssen wie Temperaturschwankungen und UV-Strahlung,
- hoher Glanz der beschichteten Oberflächen.

Es wird erwartet, daß die Härter nicht nur den ausgehärteten Lakken die vorgenannten Gebrauchseigenschaften verleihen, sondern auch die verarbeitungstechnischen Eigenschaften der Lacke vor deren Auftrag verbessern oder zumindest möglichst wenig beeinträchtigen.

Damit die Lacke problemlos mit üblichen Verfahren, z.B. durch Aufsprühen auf die zu beschichtende Oberfläche, aufgetragen werden können, sollen die Lacke eine begrenzte Viskosität aufweisen. Lacke auf Basis von 2-Komponenten-Beschichtungsmitteln enthalten deshalb üblicherweise Lösungsmittel. Der hohe Lösungsmittelgehalt dieser Lacke bereitet jedoch Probleme, da die Verarbeiter der Lacke technisch aufwendige Maßnahmen ergreifen müssen, um zu vermeiden, daß die Lösungsmittel, die beim Auftrag und Trocknen der Lacke freigesetzt werden, in die Atmosphäre gelangen. Es wurden deshalb Härter gesucht, die die Viskosität der Bindemittel-haltigen Komponente möglichst wenig erhöhen oder sogar besser noch erniedrigen. Selbstverständlich dürfen diese Härter selbst bei Raumtemperatur keine nennenswerte Flüchtigkeit aufweisen, wie dies bei handelsüblichen monomeren Isocyanaten wie Hexamethylendiisocyanat oder Isophorondiisocyanat der Fall ist.

Weiterhin sollen die 2-Komponenten-Beschichtungsmittel nach der Applikation möglichst rasch aushärten, so daß die beschichteten Gegenstände nach dem Auftrag rasch weiterverarbeitet oder benutzt werden können.

Polyisocyanate, die Allophanat- und Biuretgruppen enthalten, sind beispielsweise aus der EP-A-496208, 524501, 566037 und WO 9936455 bekannt und werden dort für den Einsatz als Härter in 2-Komponenten-Beschichtungssystemen empfohlen. Als Aufbaukomponenten kommen aliphatische Monoalkohole und alle üblichen Isocyanate in Betracht.

Aus der EP-303 150 sind Polyisocyanate mit Allophanatgruppen bekannt, die sich u.a. von Diisocyanaten und aliphatischen Alkandiolen ableiten. Die Aufbaukomponenten aus der Gruppe der cyclischen Alkandiole und Hexamethylendiisocyanat finden sich in diesen Schriften lediglich im Rahmen von Aufzählungen der geeigneten Isocyanat- und Alkoholkomponenten, die in Form von Listen zusammengefaßt sind. Wie aus dem experimentellen Teil dieser Schriften hervorgeht, liegt der Schwerpunkt auf Polyisocyanaten mit Allophanat- und Biuretgruppen, die sich von nicht-cyclischen Alkoholen ableiten.

Die aus diesen Alkoholen abgeleiteten Allophanate weisen insbesondere den Nachteil auf, daß die damit hergestellten 2-K-Beschichtungssysteme relativ langsam aushärten und auch nach vollständiger Aushärtung eine für manche Anwendungszwecke noch zu geringe Oberflächenhärte aufweisen.

Aus der EP-0 000 194 sind Polyisocyanate bekannt die sich u.a. von cycloaliphatischen Diolen und Hexamethylendiisocyanat ableiten. Nebenreaktionen wie Dimierisierung und Trimerisierung werden so viel wie möglich vermieden.

Die Eigenschaften der dort offenbarten Härter befriedigen zwar meist die üblichen Anforderungen, die bezüglich der verarbeitungstechnischen Eigenschaften der unausgehärteten flüssigen Lacksysteme, die diese Härter enthalten, und der Gebrauchseigenschaften der mit den Lacken hergestellten Beschichtungen gestellt werden. Bezüglich der Viskosität der Lacksysteme, deren Aushärtungsgeschwindigkeit sowie der Härte der damit hergestellten Beschichtungen erscheinen die Härter allerdings noch verbesserungsbedürftig.

Demgemäß wurden die eingangs definierten Verbindungen der Formel (I), Mischungen und 2-Komponenten-Beschichtungsmittel, die diese Verbindungen enthalten sowie Gegenstände, die mit diesen 2-Komponenten-Beschichtungsmitteln beschichtet sind, gefunden.

Die erfindungsgemäßen Polyisocyanate der Formel (I) leiten sich bevorzugt von Alkoholen wie 1,3- oder 1,4 Cyclohexandiol, 1,4-Cyclohexandimethanol, 1,3-Cyclopentandiol oder Tetramethyl-1,3-cyclobutandiol ab.

Darunter sind besonders solche bevorzugt in denen
- n = 1 bedeutet und beide Einheiten X Einheiten der Formel III sind (Diisocyanate Ia) oder
- n = 1 bedeutet, eine der beiden Einheiten X Wasserstoff und die andere Einheit X eine Einheit der Formel III ist (Diisocyanate Ib).

Üblicherweise werden die erfindungsgemäßen Polyisocyanate hergestellt, indem man
(i) Hexamethylendiisocyanat mit einem
   - 2-wertigen 4, 5 oder 6 gliedrigen cycloaliphatischen Alkohol, bei dem bis zu 4 an ein C-Atom gebundene Wasserstoffatome durch C₁- bis C₄-Alkylreste und ein oder zwei Methyleneinheiten durch ein Sauerstoffatom, Schwefelatom und/oder ein tertiäres Stickstoffatom, das zusätzlich einen C₁- bis C₄-Alkylrest trägt, substituiert sein können oder
   - 2-wertigen C₂- bis C₄-Alkandiol, bei dem zwischen 2 C-Atomen oder zwischen einem C-Atom und einem H-Atom ein 4, 5 oder 6 gliedriger Cycloalkylenrest, bei dem bis zu 4 Wasserstoffatome durch C₁- bis C₄-Alkylreste und ein oder zwei Methyleneinheiten durch ein Sauerstoffatom, Schwefelatom und/oder ein tertiäres Stickstoffatom, das zusätzlich einen C₁- bis C₄-Alkylrest trägt, substituiert sein können, insertiert ist,
   wobei das Molverhältnis Hexamethylendiisocyanat zu den genannten Alkandiolen 50:1 bis 3:1, bevorzugt 30 : 1 bis 5:1 beträgt, gegebenenfalls in Gegenwart eines Katalysators, der die Bildung von Allophanaten und Urethanen beschleunigt, umsetzt,
(ii) den Katalysator gegebenenfalls desaktiviert und
(iii)gegebenenfalls nicht umgesetztes Isocyanat entfernt.

Die Umsetzung kann beispielsweise auf die Weise vorgenommen werden, wie sie in der EP-A-524501 beschrieben ist.

Als Katalysatoren dienen beispielsweise quartäre Ammoniumcarboxylate, wie N,N,N-Trimethyl-N-(2-hydroxypropyl)-ammonium-2-ethylhexanoat, quartäre Ammoniumhydroxide oder Zinn- oder Zink-organische Verbindungen.

Die Umsetzung wird im allgemeinen bei Temperaturen von 50 bis 180°C durchgeführt.

Die Reaktion wird im allgemeinen so lange weitergeführt, bis das 3 bis 8 fache der Molmenge an Isocyanatgruppen abreagiert ist, die der ursprünglich in der Reaktionsmischung vorhandenen Molmenge an 2-wertigem Alkohol entspricht. Der Reaktionsfortschritt läßt sich beispielsweise nach üblichen titrimetrischen Methoden durch Messung des NCO-Gehaltes der Reaktionsmischung verfolgen.

Die Reaktion wird beendet, indem man die Reaktionsmischung abkühlt und gegebenenfalls den Katalysator entfernt, thermisch zersetzt oder ein geeignetes Mittel zusetzt, das den Katalysator desaktiviert. Hierzu sind beispielsweise Säuren wie p-Toluolsulfonsäure oder Dialkylphosphate, z.B. Dibutylphosphat oder Di-(2-Ethylhexyl)phosphat geeignet.

Nach Beendigung der Reaktion destilliert man im allgemeinen unumgesetztes Hexamethylendiisocyanat, bevorzugt bis zu einem Gehalt von weniger als 0,5 Gew.-%, ab.

Das Umsetzungsprodukt, das im wesentlichen frei von Hexamethylendiisocyanat ist, weist im allgemeinen eine Viskosität bei Raumtemperatur von 500 bis 20000 mPas, bevorzugt von 1000 bis 15000 mPas, gemessen nach ISO 3219, auf.

Üblicherweise erhält man bei dieser Vorgehensweise Mischungen (M), enthaltend
- Polyisocyanate I
- Urethane der Formel IV (Urethan IV),

   OCN-R¹- [-NH-CO-O-R²-O-CO-NH-R¹-]ₚ-NCO IV

   in der
   - die Einheiten R¹ und R² die gleiche Bedeutung wie in Formel I haben
   - und p eine Zahl von 1 bis 3 ist,
- den von Hexamethylendiisocyanat abgeleiteten Polyisocyanuraten.

Bevorzugt beträgt der Anteil an Polyisocyanaten I mindestens 10 Gew.-%.

Besonders bevorzugt sind Mischungen (M), die
- 20 bis 80 Gew.-% Polyisocyanate I,
- 0 bis 50 Gew.-% Urethane IV und
- 0 bis 80 Gew.-% von Hexamethylendiisocyanat abgeleitete Polyisocyanurate enthalten.

Gegebenenfalls können die Mischungen (M) weiterhin noch höhermolekulare Produkte enthalten, die dadurch entstehen, daß die Polyisocyanate I zusammen mit weiterem Hexamethylen-diisocyanat oder mit den anderen in der Mischung (M) enthaltenen Molekültypen unter Ausbildung von Uretdion-, Biuret- oder Isocyanuratgruppen reagieren. Im allgemeinen enthalten die Mischungen (M) derartige Produkte in Mengen bis zu 20 Gew.-%.

Aus diesen Mischungen lassen sich, falls gewünscht, die erfindungsgemäßen Polyisocyanate I einfach durch bekannte Trennmethoden wie die Gelpermeationschromatographie oder Hochleistungs-Flüssigkeitschromatographie isolieren. Dies ist jedoch im allgemeinen nicht erforderlich, sofern die Polyisocyanate I in Form der vorgenannten Mischungen als Vernetzer in 2-Komponenten-Polyurethanbeschichtungsmitteln eingesetzt werden.

Die Polyisocyanate I und die vorgenannten Mischungen (M) eignen sich insbesondere als B-Komponente bei der Herstellung von 2-Komponenten-Beschichtungsmassen, die als A-Komponente eine Verbindung, die mit Polyisocyanat reagierende Gruppen trägt, bevorzugt ein hydroxyfunktionelles Polymer (A), enthalten.

Bei den hydroxyfunktionellen Polymeren (A) handelt es sich z.B. um Polymere mit einem Gehalt an Hydroxylgruppen von 0,1 bis 20, vorzugsweise 0,5 bis 10 Gew.-%. Das zahlenmittlere Molekulargewicht Mₙ der Polymeren beträgt vorzugsweise 1000 bis 100 000, besonders bevorzugt 2000 bis 10 000. Bei den Polymeren handelt es sich bevorzugt um solche, welche zu mehr als 50 Gew.-% aus C₁-C₂₀-Alkyl(meth)acrylat, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew.-% aus C₁-C₁₀-Alkyl-(meth)-acrylaten, Styrol oder deren Mischungen bestehen.

Darüber hinaus enthalten die Polymeren (A) hydroxyfunktionelle Monomere entsprechend dem obigen Hydroxylgruppengehalt und gegebenenfalls weitere Monomere, z.B. ethylenisch ungesättigte Säuren, insbesondere Carbonsäuren, Säureanhydride oder Säureamide.

Weitere Polymere (A) sind z.B. Polyesterole, wie sie durch Kondensation von Polycarbonsäuren, insbesondere Dicarbonsäuren, mit Polyolen, insbesondere Diolen, erhältlich sind.

Weiterhin sind als Polymere (A) auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Bei den Polymeren (A) kann es sich natürlich auch um Verbindungen mit primären oder sekundären Aminogruppen handeln.

Genannt seien z.B. sogenannte Jeffamine, d.h. mit Aminogruppen terminierte Polyetherole, oder Oxazolidine.

Neben den vorstehend aufgeführten A- und B-Komponenten können in den 2-Komponenten-Beschichtungsmittel weiterhin sonstige Polyisocyanate und Verbindungen mit gegenüber Polyisocyanaten reaktionsfähigen Gruppen enthalten sein, wie sie üblicherweise in Zwei-komponenten-Beschichtungsmassen vorhanden sind.

Bevorzugt beträgt das molare Verhältnis, gebildet aus der Summe der Isocyanatgruppen in den B-Komponenten gegenüber der Summe der mit Isocyanatgruppen reaktiven Gruppen der Komponente (A), 0,6:1 bis 1,4:1, bevorzugt 0,7:1 bis 1,3:1, ganz besonders bevorzugt 1:1.

Die erfindungsgemäßen Beschichtungsmassen können weiterhin noch organische Lösemittel, z.B. Xylol, Butylacetat, Methylisobutylketon, Methoxypropylacetat, N-Methylpyrrolidon enthalten. Mit Lösemittel wird die zur Verarbeitung, d.h. zum Auftragen auf Substrate, gewünschte niedrige Viskosität der Beschichtungsmasse eingestellt.

Die Beschichtungsmassen können natürlich weitere, in der Beschichtungstechnologie übliche Zusatzstoffe, z.B. Pigmente, Füllstoffe, Verlaufshilfsmittel etc. enthalten.

Sie können weiterhin Katalysatoren für die Urethanbildung, z.B. Dibutylzinndilaurat, enthalten.

Die Herstellung der Zweikomponenten-Polyurethanbeschichtungsmittel kann in bekannter Weise erfolgen. Gewöhnlich werden die A- und die B-Komponente vor dem Auftrag der Beschichtungsmittel auf ein Substrat gemischt. Die Vermischung erfolgt üblicherweise 0 bis 12 h vor dem Auftrag. Mit Lösungsmittel kann die gewünschte Viskosität eingestellt werden.

Die Polyurethanbeschichtungsmittel können in üblicher Weise durch Spritzen, Gießen, Walzen, Streichen, Rakeln etc. auf Substrate flächig aufgebracht werden.

Die Beschichtungsmittel eignen sich insbesondere für Werkstücke mit Oberflächen aus Metall, Kunststoff, Holz, Holzwerkstoffen, Keramik oder Glas.

Die gemäß diesen Verfahren beschichteten Gegenstände weisen eine Oberfläche mit sehr guten mechanische Eigenschaften, insbesondere einer hohe Härte, Flexibilität und Chemikalienbeständigkeit auf.

### Experimenteller Teil

### A. Herstellung der erfindungsgemäßen Polyisocyanate

### 1. Herstellung von Urethan- und Allophanatgruppen enthaltenden Polyisocyanaten

Hexamethylendiisocyanat (HDI) wird unter Stickstoffbedeckung vorgelegt und auf 100°C erwärmt. Bei dieser Temperatur wird die in Tabelle 1 genannte Menge an Diol zugesetzt. Man erwärmt die Mischung auf 160°C, läßt bei dieser Temperatur reagieren und beendet die Reaktion bei dem in Tabelle 1 genannten NCO-Gehalt der Mischung. Das Reaktionsgemisch wird anschließend zur Entfernung von nicht umgesetztem HDI im Dünnschichtverdampfer bei 165°C Öltemperatur und einem Druck von 2,5 mbar destilliert.

Daten zu den Endprodukten stehen in Tabelle 1.

### 2. Herstellung eines Urethan- und Isocyanurat- und Allophanatgruppen enthaltenden Polyisocyanats

2500g Hexamethylendiisocyanat (HDI) werden unter Stickstoffbedeckung vorgelegt und auf 100°C erwärmt. Bei dieser Temperatur werden 43 g (2,5 mol%) 1,4-Cyclohexandiol zugegeben. Nach dem Lösen des Diols kühlt man die Mischung auf 80°C ab und gibt 200 Gew. ppm (bezogen auf Diisocyanat) des Katalysators N,N,N-Trimethyl-N-(2-hydroxypropyl)ammonium-2-ethyl-hexanoat zu. Die Temperatur steigt nach Zugabe des Katalysators auf 120°C. Man läßt bei dieser Tempeatur reagieren und stoppt die Reaktion bei einem NCO-Gehalt der Mischung von 41 Gew.% durch Zugabe von 250 Gew. ppm (bezogen auf Diisocyanat) Di-2-(Ethylhexyl)phosphat. Das Reaktionsgemisch wird anschließend zur Entfernung vom monomeren HDI im Dünnschichtverdampfer bei 165°C Öltemperatur und 2,5 mbar destilliert. Das Endprodukt wies einen NCO-Gehalt von 21,0 Gew.% und eine Viskosität bei 25°C von 4480 mPas auf.

### B. Herstellung und Prüfung von Klarlacken aus den erfindungs-gemäßen Polyisocyanaten

Ein erfindungsgemäßes Polyisocyanat wurde exemplarisch mit einem hydroxifunktionellen Acrylatharz (Lumitol^{®} H 136, BASF AG) im Vergleich zu einem Standard-Polyisocyanathärter (Basonat^{®} HI 100, BASF AG) entsprechend den stöchiometrischen OH/NCO-Verhältnissen gemischt. Die Einstellung auf eine Applikationsviskosität von 20 s (DIN 53 211 Becher 4 mm Auslaufdüse) erfolgte mit Butylacetat. Mit einem Filmziehrahmen wurden auf Glasplatten Beschichtungen mit einer Naßfilmdicke von 200 µm aufgetragen. Die so erhaltenen Klarlacke wurden unter Normklima gehärtet.

Der mit dem erfindungsgemäßen Vernetzer hergestellte Lack weist gegenüber einem Lack mit Standardvernetzer (Lack-Nr.1 Vergl.) eine schnellere physikalische Trocknung, bzw. einen deutlich schnelleren Anstieg der Härte (Pendeldämpfung) auf.

Alle Lacke zeigen darüberhinaus eine gute Flexibilität, Haftung sowie eine gute Kratzbeständigkeit.

Die Prüfergebnisse finden sich in Tabelle 2.

**Tabelle 1: Reaktionsprodukte aus HDI und Dialkoholen**

| Polyisocyanat | Diol | Menge bez. Isocyanat (mol %) | NCO-Gehalt der Mischung nach Reaktion (Gew.%) | NCO-Gehalt nach Destillation (Gew.%) | Viskosität bei 25°C (mPas) |
|---|---|---|---|---|---|
| 1 | 1,4-Cyclohexandiol | 10 | 38.0 | 18.4 | 9000 |
| 2 | 1,3-Cyclohexandiol | 10 | 37.6 | 18.4 | 12400 |
| 3 | 1,4-Cyclohexandimethanol | 10 | 37.9 | 17.7 | 6730 |

**Tabelle 2: Verbesserte Härtung gegenüber Stand der Technik**

| Lackzusammensetzung | | |
|---|---|---|
| Lack Nr. | 1 (Vergl.) | 2 |
| Polyisocyanat-Vernetzer | HI 100 | 1 |
| | | (siehe Tab.1) |
| | | |
| Hydroxyacrylat | H 136 | H 136 |

Lacktrocknung (Sandtrocknung = Zeit, nach der aufgerieselter Sand ohne Kraftaufwand mit einem Pinsel von der trocknenden Lackoberfläche entfernt werden kann)

| | | |
|---|---|---|
| Sandtrocknung [h] | 10 | 1 |

### Lackhärte

### Pendeldämpfung nach König [Schwingungen]

| | | |
|---|---|---|
| nach 5 h | 7 | 9 |
| nach 1 Tag | 62 | 90 |

H 136 = Lumitol® H 136 (BASF AG), hydroxyfunktionelles Acrylatharz, Festgehalt = 70 Gew.%, OH-Zahl = 135 mg KOH/g.

HI 100 = Basonat ® HI 100, HDI-Polyisocyanat (BASF AG), Viskosität ca. 3000 mPas, Festgehalt = 100 %, NCO = 22 Gew.%

## Patentansprüche

1. Mischungen enthaltend
• Polyisocyanate der Formel (I) (Polyisocyanate I),
OCN-R¹-[-Nx-CO-O-R²-O-CO-NX-R¹-]ₙ-NCO (I)
in der die Einheiten R¹, X und R² die folgende Bedeutung haben:
R¹ eine Einheit der Formel (II)
-CH₂-CH₂-CH₂-CH₂-CH₂-CH₂- (II)
X Wasserstoff oder eine Einheit der Formel III
-CO-NH-R¹-NCO III
mit der Maßgabe, daß zumindest eine der Einheiten X in den Polyisocyanaten der Formel I eine Einheit der Formel III ist, und
R²:
- ein 4, 5 oder 6 gliedriger Cycloalkylenrest, bei dem bis zu 4 Wasserstoffatome durch C₁- bis C₄-Alkylreste und ein oder zwei Methyleneinheiten durch ein Sauerstoffatom, Schwefelatom und/oder eine tertiäres Stickstoffatom, das zusätzlich einen C₁- bis C₄-Alkylrest trägt, substituiert sein können oder,
- ein C₂- bis C₄-Alkylenrest, bei dem zwischen 2 C-Atomen oder zwischen einem C-Atom und einem H-Atom ein 4, 5 oder 6 gliedriger Cycloalkylenrest, bei dem bis zu 4 Wasserstoffatome durch C₁- bis C₄-Alkylreste und ein oder zwei Methyleneinheiten durch ein Sauerstoffatom, Schwefelatom und/oder ein tertiäres Stickstoffatom, das zusätzlich einen C₁- bis C₄-Alkylrest trägt, substituiert sein können, insertiert ist
und der Index n 1, 2, oder 3 bedeutet
• Urethane der Formel IV (Urethan IV),
OCN-R¹-[-NH-CO-O-R²-O-CO-NH-R¹-]ₚ-NCO IV
in der
die Einheiten R¹ und R² die gleiche Bedeutung wie in Formel I haben (Urethan IV)
und p eine Zahl von 1 bis 3 ist,
• von Hexamethylendiisocyanat abgeleitete Polyisocyanurate.

2. Mischungen nach Anspruch 1, in denen n = 1 bedeutet und beide Einheiten X Einheiten der Formel III sind (Diisocyanate Ia).

3. Mischungen nach Anspruch 1 oder 2, in denen n = 1 bedeutet, eine der beiden Einheiten X Wasserstoff und die andere Einheit X eine Einheit der Formel III ist (Diisocyanate Ib).

4. Mischungen nach einem der vorstehenden Ansprüche, in denen der Anteil an Hexamethylendiisocyanat weniger als 0,5 Gew.-% beträgt.

5. Mischungen nach einem der vorstehenden Ansprüche, in denen der Anteil an Polyisocyanaten I mindestens 10 Gew.-% beträgt.

6. Mischungen nach einem der vorstehenden Ansprüche, enthaltend 20 - 80 Gew.% Polyisocyanate I, 0 - 50 Gew.% Polyurethane IV und 0 - 80 Gew.% der vom Hexamethylendiisocyanat abgeleiteten Polyisocyanurate.

7. Mischungen nach einem der vorstehenden Ansprüche, in denen die Einheit R² abgeleitet ist von 1,3- oder 1,4- Cyclohexandiol, 1,4-Cyclohexandimethanol, 1,3-Cyclopentandiol oder Tetramethyl-1,3-cyclobutandiol.

8. Verfahren zur Herstellung von Mischungen nach Anspruch 1 bis 7, wobei man
(i) Hexamethylendiisocyanat mit einem
• 2-wertigen 4, 5 oder 6 gliedrigen cycloaliphatischen Alkohol, bei dem bis zu 4 an ein C-Atom gebundene Wasserstoffatome durch C₁- bis C₄-Alkylreste und ein oder zwei Methyleneinheiten durch ein Sauerstoffatom, Schwefelatom und/oder ein tertiäres Stickstoffatom, das zusätzlich einen C₁- bis C₄-Alkylrest trägt, substituiert sein können oder
• 2-wertigen C₂- bis C₄-Alkandiol, bei dem zwischen 2 C-Atomen oder zwischen einem C-Atom und einem H-Atom ein 4, 5 oder 6 gliedriger Cycloalkylenrest, bei dem bis zu 4 Wasserstoffatome durch C₁- bis C₄-Alkylreste und ein oder zwei Methyleneinheiten durch ein Sauerstoffatom, Schwefelatom und/oder ein tertiäres Stickstoffatom, das zusätzlich einen C₁- bis C₄-Alkylrest trägt, substituiert sein können, insertiert ist,
wobei das Molverhältnis Hexamethylendiisocyanat zu den genannten Alkandiolen 50:1 bis 3:1 beträgt, gegebenenfalls in Gegenwart eines Katalysators, der die Bildung von Allophanaten und Urethanen beschleunigt, umsetzt,
(ii) den Katalysator gegebenenfalls desaktiviert und
(iii)gegebenenfalls nicht umgesetztes Isocyanat entfernt.

9. Zwei-Komponenten-Beschichtungsmittel, enthaltend eine Verbindung, die mit Polyisocyanat reagierende Gruppen trägt (A-Komponente), sowie eine Mischung gemäß einem der Ansprüche 1 bis 7 (B-Komponente).

10. Verfahren zum Beschichten von Gegenständen, **dadurch gekennzeichnet, daß** man
• eine Beschichtungszusammensetzung nach Anspruch 9 durch Vermischung der Komponenten (A) und (B) herstellt und
• die Beschichtungszusammensetzung innerhalb von 12 h nach deren Herstellung auf einen Gegenstand flächig aufträgt.

11. Beschichtete Gegenstände hergestellt nach Anspruch 10.

## Claims

1. A mixture comprising
• polyisocyanates of the formula (I) (polyisocyanates I),
OCN-R¹-[-NX-CO-O-R²-O-CO-NX-R¹-]ₙ-NCO (I)
in which the units R¹, X and R² have the following meanings:
R¹ is a unit of the formula (II)
-CH₂-CH₂-CH₂-CH₂-CH₂-CH₂- (II)
X is hydrogen or a unit of the formula (III)
-CO-NH-R¹-NCO (III)
with the proviso that at least one of the units X in the polyisocyanates of the formula I is a unit of the formula III; and
R²
- is a 4-, 5- or 6-membered cycloalkylene radical in which up to 4 hydrogen atoms may be substituted by C₁ to C₄ alkyl radicals and one or two methylene units may be substituted by an oxygen atom, a sulfur atom and/or a tertiary nitrogen atom which additionally carries a C₁ to C₄ alkyl radical, or
- is a C₂ to C₄ alkylene radical in which inserted between 2 carbon atoms or between one carbon atom and a hydrogen atom there is a 4-, 5- or 6-membered cycloalkylene radical in which up to 4 hydrogen atoms may be substituted by C₁ to C₄ alkyl radicals and one or two methylene units may be substituted by an oxygen atom, a sulfur atom and/or a tertiary nitrogen atom which additionally carries a C₁ to C₄ alkyl radical, and the index n is 1, 2 or 3,
• urethanes of the formula IV (urethane IV),
OCN-R¹-[-NH-CO-O-R²-O-CO-NH-R¹-]ₚ-NCO IV
in which
the units R¹ and R² are as defined for formula I (urethane IV)
and p is a number from 1 to 3,
• polyisocyanurates derived from hexamethylene diisocyanate.

2. The mixture according to claim 1, wherein n is 1 and both units X are units of the formula III (diisocyanates Ia).

3. The mixture according to claim 1 or 2, wherein n is 1, one of the two units X is hydrogen and the other unit X is a unit of the formula III (diisocyanates Ib).

4. The mixture according to any of the preceding claims, wherein the fraction of hexamethylene diisocyanate is less than 0.5% by weight.

5. The mixture according to any of the preceding claims, wherein the fraction of polyisocyanates I is at least 10% by weight.

6. The mixture according to any of the preceding claims, comprising 20 - 80% by weight of polyisocyanates I, 0 - 50% by weight of polyurethanes IV and 0 - 80% by weight of polyisocyanurates derived from hexamethylene diisocyanate.

7. The mixture according to any of the preceding claims, wherein the unit R² is derived from 1,3- or 1,4-cyclohexanediol, 1,4-cyclohexanedimethanol, 1,3-cyclopentanediol or tetramethyl-1,3-cyclobutanediol.

8. A process for preparing mixtures according to any of claims 1 to 7, which comprises
(i) reacting hexamethylene diisocyanate with a
• divalent 4-, 5- or 6-membered cycloaliphatic alcohol in which up to 4 hydrogen atoms attached to a carbon atom may be substituted by C₁ to C₄ alkyl radicals and one or two methylene units may be substituted by an oxygen atom, a sulfur atom and/or a tertiary nitrogen atom which additionally carries a C₁ to C₄ alkyl radical, or
• divalent C₂ to C₄ alkanediol in which inserted between 2 carbon atoms or between one carbon atom and a hydrogen atom there is a 4-, 5- or 6-membered cycloalkylene radical in which up to 4 hydrogen atoms may be substituted by C₁ to C₄ alkyl radicals and one or two methylene units may be substituted by an oxygen atom, a sulfur atom and/or a tertiary nitrogen atom which additionally carries a C₁ to C₄ alkyl radical,
the molar ratio of hexamethylene diisocyanate to the abovementioned alkanediols being from 50:1 to 3:1, if appropriate in the presence of a catalyst which accelerates the formation of allophanates and urethanes,
(ii) deactivating the catalyst, if appropriate, and
(iii)removing any unreacted isocyanate if appropriate.

9. A two-component coating composition comprising a compound which carries polyisocyanate-reactive groups (component A) and a mixture according to any of claims 1 to 7 (component B).

10. A method of coating an article, which comprises
• preparing a coating composition according to claim 9 by mixing components (A) and (B), and
• within 12 h after its preparation, applying the coating composition two-dimensionally to an article.

11. A coated article produced according to claim 10.

## Revendications

1. Mélanges contenant
· des polyisocyanates de la formule (I) (polyisocyanates I),
OCN-R¹-[-NX-CO-O-R²-O-CO-NX-R¹-]ₙ-NCO (I)
dans laquelle les unités R¹, X et R² ont la signification suivante :
R¹ représente une unité de la formule (II) :
-CH₂-CH₂-CH₂-CH₂-CH₂-CH₂- (II)
X est de l'hydrogène ou une unité de la formule III :
-CO-NH-R¹-NCO III
à la condition qu'au moins une des unités X dans les polyisocyanates de la formule I soit une unité de la formule III,
et
R² représente :
- un radical de cycloalkylène à 4, 5 ou 6 termes dans lequel jusqu'à 4 atomes d'hydrogène peuvent être substitués par des radicaux alkyle en C₁-C₄ et une ou deux unités méthylène par un atome d'oxygène, un atome de soufre et/ou un atome d'azote tertiaire qui porte en supplément un radical alkyle en C₁-C₄, ou
- un radical alkylène en C₂-C₄ dans lequel, entre 2 atomes de C ou entre un atome de C et un atome de H, est inséré un radical cycloalkylène à 4, 5 ou 6 termes, dans lequel jusqu'à 4 atomes d'hydrogène peuvent être substitués par des radicaux alkyle en C₁-C₄ et une ou deux unités méthylène par un atome d'oxygène, un atome de soufre et/ou un atome d'azote tertiaire qui porte en supplément un radical alkyle en C₁-C₄,
et l'indice n signifie 1, 2 ou 3,
· des uréthanes de la formule IV (uréthane IV),
OCN-R¹- [-NH-CO-O-R²-O-CO-NH-R¹-]ₚ-NCO (IV)
dans laquelle
les unités R¹ et R² ont la même signification que dans la formule I (uréthane IV),
et p est un nombre de 1 à 3,
· des polyisocyanurates dérivés de diisocyanate d'hexaméthylène.

2. Mélanges suivant la revendication 1, dans lesquels n = 1 et les deux unités X sont des unités de la formule III (diisocyanates Ia).

3. Mélanges suivant la revendication 1 ou 2, dans lesquels n = 1, une des deux unités X est de l'hydrogène et l'autre unité X est une unité de la formule III (diisocyanates Ib).

4. Mélanges suivant l'une des revendications précédentes, dans lesquels la fraction de diisocyanate d'hexaméthylène est inférieure à 0,5 % en poids.

5. Mélanges suivant l'une des revendications précédentes, dans lesquels la fraction de polyisocyanates I est au moins de 10 % en poids.

6. Mélanges suivant l'une des revendications précédentes, contenant 20-80 % en poids de polyisocyanates I, 0-50 % en poids de polyuréthane IV et 0-80 % en poids des polyisocyanurates dérivés de diisocyanate d'hexaméthylène.

7. Mélanges suivant l'une des revendications précédentes, dans lesquels l'unité R² est dérivée de 1,3-cyclohexanediol, de 1,4-cyclohexanediol, de 1,4-cyclohexanediméthanol, de 1,3-cyclopentanediol ou de tétraméthyl-1,3-cyclobutanediol.

8. Procédé de préparation de mélanges suivant les revendications 1 à 7, dans lequel
(i) on fait réagir du diisocyanate d'hexaméthylène avec
· un alcool cycloaliphatique divalent à 4, 5 ou 6 termes, dans lequel jusqu'à 4 atomes d'hydrogène fixés sur un atome de C peuvent être substitués par des radicaux alkyle en C₁-C₄ et une ou deux unités méthylène par un atome d'oxygène, un atome de soufre et/ou un atome d'azote tertiaire qui porte en supplément un radical alkyle en C₁-C₄, ou
· un alcanediol en C₂-C₄ divalent dans lequel, entre 2 atomes de C ou entre un atome de C et un atome de H, est inséré un radical cycloalkylène à 4, 5 ou 6 termes, dans lequel jusqu'à 4 atomes d'hydrogène peuvent être substitués par des radicaux alkyle en C₁-C₄ et une ou deux unités méthylène par un atome d'oxygène, un atome de soufre et/ou un atome d'azote tertiaire qui porte en supplément un radical alkyle en C₁-C₄,
le rapport molaire entre le diisocyanate d'hexaméthylène et les alcanediols cités étant de 50/1 à 3/1, éventuellement en présence d'un catalyseur qui accélère la formation d'allophanates et d'uréthanes,
(ii) on désactive éventuellement le catalyseur, et
(iii)on élimine éventuellement de l'isocyanate n'ayant pas réagi.

9. Produit de revêtement à deux composants, contenant un composé qui porte des groupes réactifs avec un polyisocyanate (composant A) ainsi qu'un mélange selon l'une des revendications 1 à 7 (composant B).

10. Procédé de revêtement d'objets, **caractérisé en ce que**
· on prépare une composition de revêtement suivant la revendication 9 par mélange des composants (A) et (B), et
· on applique la composition de revêtement de manière unie sur un objet dans un intervalle de 12 heures après sa préparation.

11. Objets revêtus préparés selon la revendication 10.
